# EUROPEAN PATENT APPLICATION

(11) **EP 4 131 019 A1**
(43) Date of publication of application: **08.02.2023**
(21) Application number: 21189894.5
(22) Date of filing: 05.08.2021
(51) Int. Cl.: G06F 16/25, G06N 20/00

(54) **COMPUTER-IMPLEMENTED METHOD TO SELECT R2RML ENGINES AND SYSTEM TO PERFORM METHOD**

(71) Applicant: Siemens Aktiengesellschaft, 80333 München (DE)
(72) Inventor: Aigner, Tobias, 81543 München (DE); Shyam Sunder, Swathi, 81549 München (DE)

(57) **Abstract**

The present invention relates to a selection tool and a computer-implemented method for selecting R2RML engines, particularly for preparing data in order to feed them into data driven and/or artificial intelligence applications from heterogenous data. This application discloses for the first time a computer-implemented method to select R2RML engines and system to perform the method comprising a R2RML engine selection component that either is configured to automatically select a suitable R2RML engine by a rule processing component and/or by AI. The rule processing component coordinates a number of rules and optionally a given order of precedence of the available rules, too. The order of precedence is a given specification of the user and/or of an AI coupled with the system.

## Description

The present invention relates to a selection tool and a computer-implemented method for selecting R2RML engines, particularly for preparing data in order to feed them into data driven and/or artificial intelligence applications from heterogenous data.

In order to integrate relational databases into Semantic Web applications, relational databases need to be mapped to RDF. The W3C is in the process of ratifying two standards to map relational databases to RDF: Direct Mapping and R2RML mapping language. This invention is about the latter one the mapping via the R2RML mapping language.

A relational database is a type of database that stores and provides access to data points that are related to one another. It presents data to the user as relations for example a presentation in tabular form, as a collection of tables with each table consisting of a set of rows and columns. Relational operators manipulate the data in tabular form.

Resource Description Framework, "RDF" is a World Wide Web Consortium "W3C" specification originally designed as a metadata data model. It has come to be used as a general method for conceptual description and/or modeling of information that is implemented in web resources, using a variety of syntax and data serialization formats. It is also used in knowledge management applications.

R2RML is a language for expressing customized mappings from relational databases to RDF datasets. Such mappings provide the ability to view existing relational data in the RDF data model, expressed in a structure and target vocabulary of the mapping author's choice.

The R2RML specification is a widely used W3C standard for mapping from relational databases to RDF. A R2RML engine component is used to transform the source data with a mapping file to the resulting RDF. For processing R2RML mappings several data processing engines are presently available and there are steadily additional new ones coming up.

Data processing is, generally spoken the collection and manipulation of items of data to produce meaningful information. Depending on the suitable data processing machine the time and energy for data processing and data preparation varies widely. There is a need to find the most suitable R2RML engine component for a given R2RML mapping-problem. Such a R2RML mapping data processing engine is a parser.

The selection of a suitable R2RML engine component for a given problem is until now regularly done manually, it is a very difficult and time-consuming task.

It is therefore an object of the present invention to provide a computer-implemented method to select a suitable R2RML engine component, in particular a suitable R2RML parser and/or a suitable R2RML mapping component, according to independent claim 1 as well as a system to select automatically a suitable R2RML engine component according to the further independent claim. Refinements of the present invention are subject of the dependent claims.

According to a first aspect of the present invention a computer-implemented method of selecting automatically a suitable R2RML engine component, comprising the following steps:
- reading of the input from either a database or a file through an input component,
- storage of the input by the input component memory component
- providing the input to the data processing component
- processing of the input by the data processing component
- selecting of a suitable R2RML engine component by the data processing component through a R2RML engine selection component
- the R2RML engine selection component "RESC" providing either
   o an identification of a most suitable R2RML engine component and/or
   o a ranking list of all suitable R2RML engine components suitable for mapping the given input, where the ranking may comprise a number of equally suitable R2RML engine components,
- processing of the input data by the Data Processing component
- executing the selected R2RML engine component to generate results
- transferring of the results to the output component
- writing of the results transmitted from the Data Processing component through the output component.

According to a second aspect of the present invention a system for selecting automatically a suitable R2RML engine is arranged and configured for executing the computer-implemented method as described above. The system comprises an input component - IC -, an output component -OC-, a data processing component -DPC-, one or more R2RML engine selection component(s) - RESCs - with or without one or more interfaces to artificial intelligence and a number of R2RML engine components whereby the system is arranged and configured to select automatically a suitable R2RML engine out of a given number of R2RML engine components linked by convenient interfaces to the data processing component, the data processing component being configured to use the selected R2RML engine to generate results which are transferred to the output component and the output component being configured to write the results either to a file and/or a graph database.

According to a refinement of the present invention the data processing component of the system may further comprise a link and/or an interface to a distributed database - e.g. blockchain - where further Rule Components and/or AI may be available. These rules may than be automatically be integrated in the system if the system is configured to.

System comprising:
- R2RML engine component comprises - for example - one or more components being chosen from the group of the following components: rule processing component -RPC-, a number of rule components -RCs-, artificial intelligence component -AI-,
- ...which uses a rule processing component, the latter being configured to select a convenient R2RML engine component using the number of rule components it is linked to and optionally comparing it with an additional specification of an order of precedence of the available rule components

According to a refinement of the present invention the "R2RML engine selection component" - RESC - is configured to either
o initiate by an interface with the Data Processing component a Rule Processing component which is
   ▪ connected to a number of rule components and which is
   ▪ configured to select - depending on the input and optionally on an order of precedence of the available rule components - a suitable R2RML engine component
   and/or
o integrate by another one or more interface(s) with the Data Processing component artificial intelligence in the process of selecting automatically a suitable R2RML engine component either using
   ▪ active learning approaches by manual comparison of a number of results with different R2RML engines and/or
   ▪ active learning approaches by a genetic algorithm and/or
   ▪ machine learning approaches by using the hierarchical structure of a decision tree,
   ▪ deriving a hierarchical representation of the available rules for selecting one or more suitable R2RML engine component(s) by means of traversing hierarchically through a decision tree
   and finally
o transmitting an identification of a most suitable R2RML engine component and/or
o transmitting a ranking list of all suitable R2RML engine components suitable for mapping the given input, where the ranking may comprise a number of equally suitable R2RML engine components.

An "Input Component" is any device or any piece of computer hardware and/or software equipment that receives any kind of information in form of digital data being stored in digital form, for example signals, datasets, files, and or others being available in relational dataset form.

An "Output component" as used herein is any device or any piece of computer hardware and/or software equipment that converts information into readable form, especially into machine readable and/or human readable form. It can be a file or a database, e.g. a graph database, but also text, graphics, tactile, audio and/or video. Some of the output components are Visual Display Units (VDU) i.e. a monitor, printer graphic output device, plotter, speaker and so on.

"input" or "input data" according to the present invention is any source data in form of "raw" digital data that has not been processed for use in machines, e.g., artificial intelligence.

Raw data is available in form of relational databases. As mentioned above, a R2RML Processor is used to transform the input data with a mapping file to the resulting RDF. For processing R2RML mappings several R2RML engines are available, commercial ones and also open source. The selection of the most suitable or even of a suitable R2RML engine component is difficult and time consuming and for every new set of raw data a different task. Not only because the raw data themselves always differ, but also because the number of rule components for selection of the suitable R2RML engine component steadily change and/or new ones are added while older ones disappear.

The rule components "RCs" are subject to permanent variation and generally spoken no two cases of choosing the correct rule for selection of a R2RML engine component for a given input raw data are equal. According to a refinement of the present invention the system comprises a data processing component that is linked to a distributed database.

According to a refinement of the present invention the system is configured to automatically integrate new available rule components into the rule processing component.

Often a set of requirements and criteria is defined for evaluating and selecting a R2RML engine component. However, determining the requirements and criteria can be difficult since the use case or the input data could change. If this is the case a selected R2RML engine component might not be the most suitable. Additionally, if new R2RML engine components are available they must be integrated into the system.

Each of the available R2RML engine components provide different features and advantages. Therefore, selecting the most suitable R2RML engine component depends on the use case and the available data. It also requires very detailed knowledge about the tools.

Typically, just one R2RML engine component is used. Which one to choose is - for example - done by evaluating several R2RML engine components. After comparison and ranking - that can be done manually by a user and/or automatically by the RESC - of the results the system selects and uses the R2RML engine component that brings up the results which show the highest rank.

According to a refinement of the present invention the system may additionally comprise an active learning tool, for example in form of artificial intelligence. This AI component may be trained by the ranking of the compared results with different R2RML engine components.

Additionally, the user could be asked by the system about the results of the processing if the R2RML engine component. This would be an active learning approach by manual comparison of a number of results with different R2RML engines and thereby further input to the ranking of the compared results.

According to another refinement of the present invention the system may further comprise another artificial intelligence tool that is based on a decision tree. This machine learning tool may be an alternative for the rule processing component and/or even replace the Rule processing component and/or the rule components within the system.

As a refinement of this embodiment the decision tree may be structured as a classification tree.

If the system comprises a decision tree the combination of the input data, e.g. raw data and according mapping files may - for example - be used as samples in such a classification tree, while the different R2RML engine components would serve as classes. Using the AI component, these data can be used for training the decision tree on the task of selecting the most suitable R2RML engine component.

Unless indicated otherwise in the description below, the term "component" relates to any computer and/or computer part and/or assembly of computer parts of software and/or hardware that may be used in the system according to the invention. Each component may comprise an associated hardware device such as a physical part of a computer the central processing unit, computer data storage, memory, controller, etc.... and/or a software such as a program, a software system and/or an application program.

Unless indicated otherwise in the description below, the terms "process", "execute", "read", "computer-implemented", "compute", "discover", "generate", "configure", "write" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

"Computers" can be for example personal computers, servers, programmable logic controllers (PLCs), handheld computer systems, Pocket PC devices, mobile radios and other communication devices that can process data in computer-aided fashion, processors and other electronic devices for data processing. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, "provide", in particular in regard to data and/or information, can be understood to mean for example computer-aided provision. Provision is performed for example via an interface - e.g. a database interface, a network interface, an interface to a memory unit-. This interface can be used for example to convey and/or send and/or retrieve and/or receive applicable data and/or information during the provision.

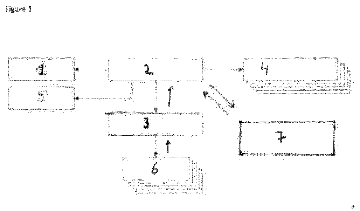

In the following, possible embodiments of the different aspects of the present invention are described in more detail with reference to the enclosed figure.

The figure shows a block diagram of a possible exemplary embodiment of a system according to the present invention.

The system as shown in this embodiment comprises the following components:
The Input Component (IC) 1 reads the input data from a database and/or a file. The input component provides the input data to the Data Processing component (DPC) 2. The DPC 2 gets the input from IC 1. The DPC 2 uses as a R2RML engine selection component (RESC) the Rule Processing component (RPC) 3 and/or an Artificial Intelligence component (AIC) 7 to select the most suitable R2RML engine component (REC) 4. The DPC 2 then starts that REC 4 and uses the Output Component (OC) 5 to write resulting data.

As shown in this embodiment two kinds of RESCs - RPC 3 and/or AIC7 may be used by the DPC 2 to select the most suitable REC 4.

After initialization by the DPC 2 the RPC 3 coordinates the rule processing to select which REC 4 is the most suitable one. The RPC 3 is configured to use all available Rule Component(s) (RCs) 6 and optionally also a user-specified order of precedence of the RCs - for example to precedence of certain criteria like the performance.

The RCs represent all available rules for the criteria of selecting a R2RML engine component like
- File size: on larger files some data processing engines are faster and therefore more suitable than others.
- Features: The R2RML specification defines features that are not supported by all R2RML data processing engines, e.g. so called "R2RML joins" are not supported by all processing engines.
- Database type: R2RML processing engines do not always support all databases.
- Input source: if the input is a csv file or database file.
The REC 4 represents an instance of a data processing engine.

CSV file "comma-separated values"- file is a plain text file that can be opened in a variety of programs. A CSV file is a simple text file in which information is separated by commas. CSV files are most commonly encountered in spreadsheets - like Microsoft Excel, Open Office, Google Sheets ... - and databases. It is a very widespread and popular file format for storing and reading data because it is simple, and it is compatible with most platforms.

After initialization by the DPC 2 the AIC 7 - for example - runs some samples by mapping of the same input with different RECs4, compares and ranks the results.

According to another example the AIC 7 runs a lot of samples by a genetic algorithm and ranks the results that are transmitted to the DPC 2.

In both cases, the ranking is provided to the DPC 2 that selects the most suitable REC that produced the results with the highest rank.

According to another example the AIC 7 derives a hierarchical representation of all available RECs for a given input through a decision tree. In that case, the DPC 2 selects the REC 4 based on that hierarchical representation.

The method is configured to perform the following steps:
The input is read by the IC 1 from either a database or a file.

The DPC 2 may optionally be configured to specify the order of precedence of the RCs 6. This configuration may be executed manually by the user and/or partially manually and/or automatically and/or partially automatically by using an artificial intelligence component (AIC) 7.

The DPC 2 starts the RPC 3 and/or the AIC 7 to automatically select the most appropriate REC 4.

The RPC 3 uses the input and checks all available RCs 6 to select the most suitable REC 4.

There are several possible results:
a) If no matches are available, a random REC 4 may be selected.
b) If one match is available, only this is represented.
c) If several matches all equally suitable are available, a random one out of them may be presented.
d) If several matches - which not all are equally suitable - are available, then the order of precedence is used to select the most suitable one.

With the DPC 2 using the AIC 7 a machine learning approach may be integrated into the method.

According to one embodiment, this may be in form of one or several decision tree(s). With this approach the RPC 3 and the RCs 6 can be replaced by decision trees, in particular and specifically classification trees. The combination of input data and mappings file would serve as the sample and the different RECs would serve as classes. This data can be used for training the decision tree on the task of selecting the most suitable REC 4.

In another embodiment the AIC can learn from prior experience with active learning approaches. The user and/or a genetic algorithm could rank the results of the processing if the REC 4 was appropriate, and it could learn from that.

Additionally, or alternatively the results from multiple RECs could be ranked. From those results a user and/or the AIC 7 could select the most suitable REC 4 or rank the RECs in order of preference. Such feedback could help to improve the quality for selecting the most suitable REC on subsequent use cases.

The advantages of the method and system for automatically select a suitable R2RML engine component according to one embodiment of the present invention are:
1. Automatic detection of the most suitable data processing R2RML engine component.
2. No manual evaluation and selection from available processing R2RML engine components.
3. Known solutions just select one R2RML engine component and stick to that choice for all datasets and use cases. The proposed solution automatically selects the most suitable processing engine for each input independent whether dataset, file and/or use case.
4. Improved data quality and robustness, if specific features are required from a data processing R2RML engine component the best suitable would be automatically selected. This improves the quality since otherwise either the data would not be processed or be partially/incorrectly processed with a different R2RML engine component.
5. Better performance, e.g. for large datasets a fast processing engine can be selected for the task.
6. New rules and/or new R2RML engine components may be easily and automatically integrated into the system and accordingly also being used by the method.
7. System may comprise AI and this is being trained by results of previous selection processes and thus getting better all the time.

This application discloses for the first time a computer-implemented method to select R2RML engines and system to perform the method comprising a R2RML engine selection component that either is configured to automatically select a suitable R2RML engine by a rule processing component and/or by AI. The rule processing component coordinates a number of rules and optionally a given order of precedence of the available rules, too. The order of precedence is a given specification of the user and/or of an AI coupled with the system.

## Claims

1. Computer-implemented method of selecting automatically a suitable R2RML engine component, comprising the following steps:
- reading of the input from either a database and/or a file through an input component,
- storage of the input by the input component memory component
- providing the input to the data processing component
- processing of the input by the data processing component
- selecting of a suitable R2RML engine component by the data processing component through a R2RML engine selection component
- the R2RML engine selection component "RESC" providing either
o an identification of a most suitable R2RML engine component and/or
o a ranking list of all suitable R2RML engine components suitable for mapping the given input, where the ranking may comprise a number of equally suitable R2RML engine components,
- processing of the input data by the Data Processing component
- executing the selected R2RML engine component to generate results
- transferring of the results to the output component
- writing of the results transmitted from the Data Processing component through the output component.

2. Method according to claim 1, whereby at least some of the results of the selection of the most suitable R2RML engine component are used to train an artificial intelligence component.

3. Method according to one of the claims 1 or 2, whereby new rules are integrated in the R2RML engine selection component.

4. Method according to one of the previous claims, whereby the R2RML engine selection component is initiated by the data processing component.

5. Method according to one of the previous claims, whereby the R2RML engine selection component runs a rule processing component that is linked to a number of rule components.

6. Method according to one of the previous claims, whereby the R2RML engine selection component runs an artificial intelligence component.

7. Method according to one of the previous claims, whereby an order of precedence of the available rules is used by the R2RML engine selection component.

8. System for computer-implemented selection of a suitable R2RML engine component, the system comprising:
- an input component - IC -,
- an output component -OC-,
- a data processing component -DPC-,
- one and/or more R2RML engine selection component(s) - RESCs - with or without one or more interfaces to artificial intelligence and
- a number of R2RML engine components whereby the system is arranged and configured
- to select automatically a suitable R2RML engine out of a given number of R2RML engine components linked by convenient interfaces to the data processing component,
- the data processing component being configured to use the selected R2RML engine to generate results which are transferred to the output component and the output component being configured to write the results either to a file and/or a graph database.

9. System according to claim 8, whereby the system comprises a rule processing component.

10. System according to one of the claims 8 or 9, whereby the system comprises a rule processing component that has one/and or more interface(s) with a number of rule components.

11. System according to one of claims 8 to 10, whereby the system comprises a data processing component that is linked to a distributed database.

12. System according to one of claims 8 to 11, whereby the system is configured to automatically integrate new available rule components into the rule processing component

13. System according to one of claims 8 to 12, whereby the system comprises artificial intelligence.

14. System according to one of claims 8 to 13, whereby the artificial intelligence of the system is at least partially trained by a genetic algorithm.

15. System according to one of claims 8 to 14, whereby the system comprises artificial intelligence that uses a decision tree.
